# EUROPÄISCHE PATENTANMELDUNG

(11) **EP 1 065 429 A1**
(43) Veröffentlichungstag der Anmeldung: **03.01.2001**
(21) Anmeldenummer: 99111999.1
(22) Anmeldetag: 29.06.1999
(51) Int. Cl.: F16L 55/165

(54) **Vorrichtung zur Herstellung von Auskleidungen im Inneren von Schächten und/oder Leitungen mit wasserdichtem, harzbeschichtetem Filz**

(71) Anmelder: Idroambiente s.a.s., di Giorgio Dini & C., 20021 Bollate (Milano) (IT)
(72) Erfinder: Dini, Giorgio Idroambiente s.a.s. di Giorgio Dini, 20021 Bollate (Milano) (IT)
(74) Vertreter: Puschmann, Heinz H., Dipl.-Ing.(FH)

(57) **Zusammenfassung**

Vorrichtung zur Herstellung von Auskleidungen im Inneren von Schächten und/oder Leitungen mit einem wasserdichten Filz (15), die im wesentlichen aus einer Raupebesteht, der sich aus einem Expansionsrohr (1), zwei Endstücken (2, 3), einem Innenschlauch (4), drei Aufhängungsseilen (5) und einem unteren Schutzkorb (6) zusammensetzt.

## Beschreibung

Bei gebohrten Schächten und/oder Leitungen besteht die Notwendigkeit, Risse und/oder Öffnungen in Wänden abzudichten. Wenn man z. B. vermeiden möchte, dass verunreinigtes Schichtwasser, das sich nahe an der Oberfläche befindet, in einen Schacht eindringt, ist es erforderlich, den Teil des Schachtes abzudichten, in dem das Wasser in den Schacht eindringt.

Ziel der vorliegenden Erfindung ist es, eine Vorrichtung anzugeben, welche mehr oder weniger lange Teile der Innenwände von Schächten und/oder Leitungen auskleidet.

Die Abdichtung erfolgt erfindungsgemäß durch Verwendung eines wasserdichten Filzes, der in dem Schacht und/oder in den Leitungen von einer Raupe (einem Packer) in entsprechender Bauweise getragen wird.

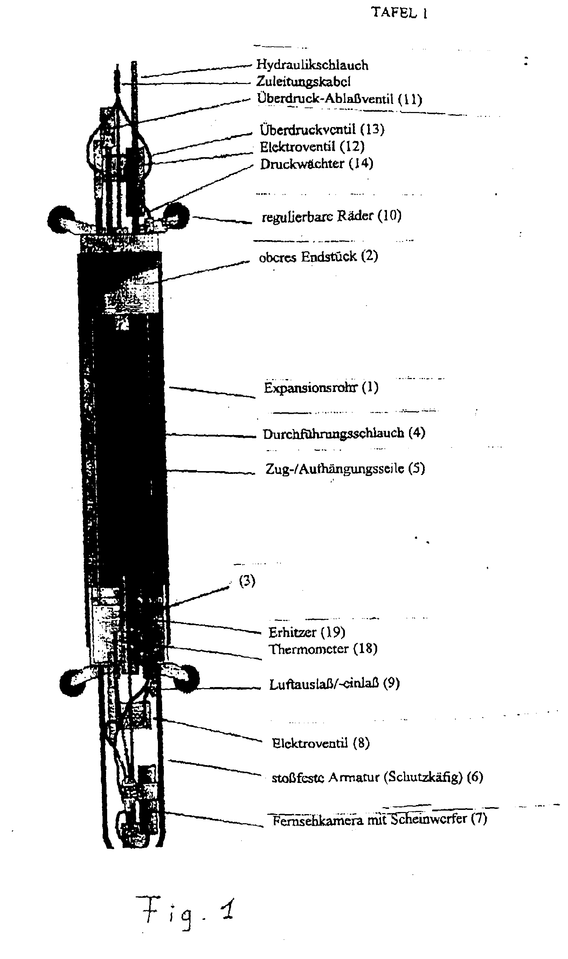

Diese erfindungsgemäße Raupe wird nun unter Bezugnahme auf Figur 1 beschrieben.

Ein Rohr 1, z. B. aus Paragummi, trägt einen abgedichteten Filz und ist der Teil, der, wenn er sich ausweitet, das Andrücken des Filzes gegen die Schachtwand bewirkt.

Zwei Endstücke 2, 3, z. B. aus einer Leichtlegierung und Aluminium, schließen das Gummirohr und lassen die Aufnahme der Instrumente und der Bedienungsgeräte zu.

Ein Innenschlauch 4 zur Verbindung der zwei Endstücke 2, 3 lässt es zu, eine Durchführung für Wasser aus dem Schacht und/oder den Leitungen und für die Zuleitungskabel der unter der Raupe angeordneten Einrichtungen vorzusehen. Die Aufhängungsseile 5 halten die beiden Endstücke im Inneren des Rohres 1 aus Paragummi zurück. In einem unteren, stoßfesten Schutzkorb 6 sind eine Fernsehkamera 7 mit einem Beleuchtungsscheinwerfer sowie ein Elektroventil 8 und ein Luftauslass-/Einlass-Ventil 9 untergebracht. Die Raupe ist mit einstellbaren Rädern 10 ausgestattet, welche den Abstieg in den Schacht oder die Einfahrt in die Leitung erleichtern. Im oberen Teil der Raupe sind ein Überdruck-Ablassventil 11, ein Elektroventil 12, ein Überdruckventil 13 und ein Druckwächter 14 angeordnet.

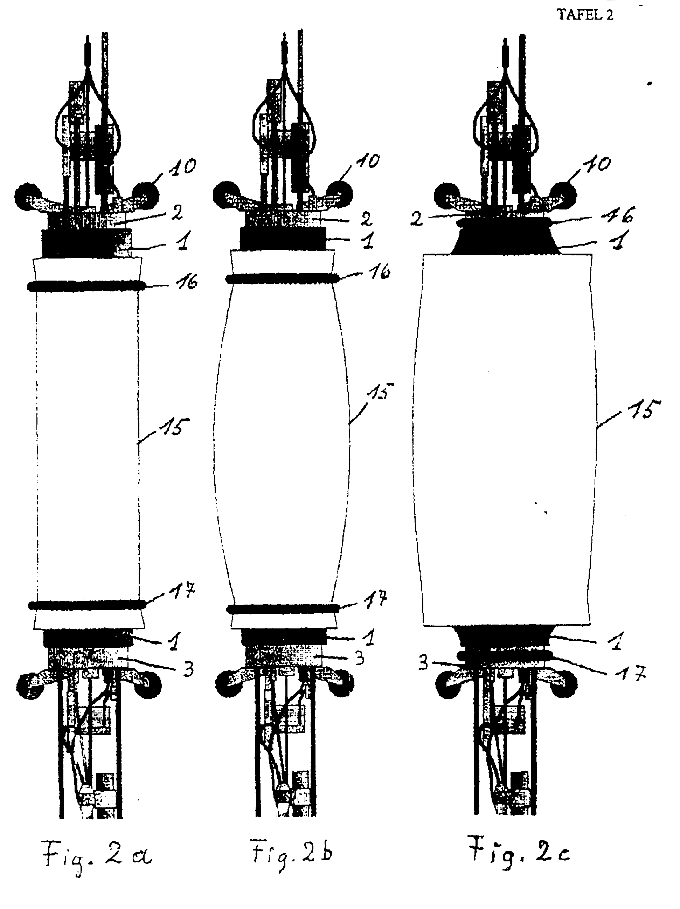

In den Figuren 2a, 2b, 2c ist die Freigabe des Filzes 15 von der Raupe schematisch dargestellt.

Der Filz 15 wird in Fig. 2a von einem oberen Ring 16 und von einem unteren Ring 17 auf dem Rohr 1 gehalten. Diese Gummiringe (vom Typ O-Ring) umschließen den Filz an beiden Endstücken und werden durch das Aufblähen der Raupe, das immer von der Mitte ausgeht, gezwungen, sich nach oben und nach unten bis zu den Endstücken 2, 3 wegzubewegen. Der Ausklinkmechanismus der Ringe wird gegebenenfalls durch einen elektromechanischen Ausklinkmechanismus unterstützt oder ersetzt, der von der Oberfläche aus gesteuert wird und etwaige Gurte zur Befestigung des Filzes am Körper der Raupe löst. Dies ist in den Figuren 2b und 2c dargestellt. Die Anbringung des zweckmäßigerweise harzbeschichteten Filzes 1b erfolgt in folgender Weise: die Raupe wird in den Schacht oder in die Leitung eingefahren, und sobald der abzudichtende Teil des Schachtes oder der Leitung erreicht ist, wird das Gummirohr 1 aufgebläht (mit erwärmtem Wasser oder, falls kein Wasser vorhanden ist, mit warmer Luft).

Der Filz wird gegen die Innenwände des Schachtes oder der Leitung gedrückt und macht, sobald er polymerisiert und wieder abgekühlt ist, diesen Teil undurchlässig gegenüber Zu- oder Abflüssen. Im unteren Ende 3 der Raupe befinden sich ein Thermometer 18 und ein Widerstand 19, welche die Beibehaltung der Polymerisationstemperatur des Wassers in der Raupe zulassen.

Mit der Überwachungskamera 7 und dem Beleuchtungsscheinwerfer, die zweckmäßigerweise mit der Oberfläche verbunden sind, ist es möglich, die Raupe korrekt anzubringen.

An Stelle des Durchführungsschlauches 4 kann auch ein starres Rohr mit einer dichten Teleskopverbindung oder einer dichten, elastischen Verbindung vorgesehen sein.

Der zur Auskleidung mittels Raupe verwendete Filz setzt sich, gemäß der allgemein bekannten Bauweise, aus absorbierenden Materialien variabler Stärke mit einer Beschichtung aus undurchlässigem Material auf einer Oberfläche zusammen.

Jedes Filzstück wird, auf den trockenzulegenden Abschnitt bezogen, in doppelter Länge zugeschnitten, nachdem es zweckmäßigerweise mit einem Rohr des erforderlichen Durchmessers verschweißt wurde.

Auf diese Weise wird ein Gewebeschlauch gebildet, dessen undurchlässige Oberfläche nach außen gewandt ist.

Im Gegensatz zu horizontalen Trockenlegungen sieht das erfindungsgemäße Verfahren anstatt der Isolierung des Schlauchs gegenüber dem Kontakt mit Wasser, das in dem auszukleidenden Rohr vorhanden ist, durch die vorherige Einführung eines Schlauchs aus Leicht-PVC, vor, den Schlauch so umzuschlagen, dass die beiden absorbierenden Flächen übereinandergelegt sind. Diese neue Methode verleiht dem Schlauch eine doppelte Dicke und die doppelte Undurchlässigkeit nach außen in bezug auf das harzbeschichtete Gewebe (d. h. im Inneren des Rohres, das der Schlauch bildet, und außerhalb desselben).

Wenn das vordere Ende und das hintere Ende des Schlauches selbst absolut genau zusammenliegen, wird das Verschweißen und das Versiegeln durchgeführt, wobei aber jedenfalls Entweichungsöffnungen für gegebenenfalls im Inneren des harzbeschichteten Gewebes vorhandene Restluft vorgesehen werden.

Unter Anwendung des bekannten Verfahrens wird das Beschichtungsharz vermischt und dann ins Innere des Schlauches gegossen, so dass das Harz das Innengewebe imprägnieren kann. Für das Harzbeschichtungsverfahren kann von Kalandern, Walzen und einer Pumpe für das spezifische Volumen Gebrauch gemacht werden.

Während der Phase des Herabsenkens des (fest mit der Raupe verbundenen) Filzes ist darauf zu achten, dass der Teil, welcher den Umschlag bildet, nach unten und der geschweißte Teil nach oben gerichtet ist. Der Wasserdruck (der durch die Wirkung des vertikalen Herabsenkens von unten nach oben wirkt) wird aus dem Filz jegliche gegebenenfalls vorhandenen Luftblasen entweichen lassen. Die Viskosität des Harzes und der Anfangsdruck des Wassers hindern dieses daran, ins Innere der zweischichtigen Struktur, die durch die Doppelgewebeschicht des Schlauches gebildet wird, eindringen zu können.

## Patentansprüche

1. Vorrichtung zur Herstellung von Auskleidungen im Inneren von Schächten und/oder Leitungen, **dadurch gekennzeichnet**, dass sie im wesentlichen aus einer Raupe (Fig. 1) und aus einem wasserdichten Filz (15) bestehen, wobei die Raupe aus einem Expansionsrohr (1), zwei Endstücken (2, 3) zur Aufnahme der Instrumente und einem Bedienungsgerät, einem Innenschlauch (4) und einem unteren Schutzkorb (6) gebildet ist.

2. Raupe nach Anspruch 1, **dadurch gekennzeichnet**, dass sie einstellbare Räder oder Gleitlager (10) und im oberen Teil ein Überdruck-Ablassventil (11), ein Elektroventil (12), ein Überdruckventil (13) und ein Druckwächter (14) aufweist.

3. Raupe nach den Ansprüchen 1 und 2, **dadurch gekennzeichnet**, dass in dem unteren Endstück (3) ein Thermometer (18) und elektrische Widerstände (19) untergebracht sind, während im Schutzkorb (6) ein Elektroventil (8) und eine Fernsehkamera (7) mit einem Scheinwerfer angeordnet sind.

4. Raupe nach den Ansprüchen 1 bis 3, **dadurch gekennzeichnet**, dass auf dem Expansionsrohr (1) ein wasserdichter Filz (15) sitzt, der von Gummiringen (16, 17) gehalten wird.

5. Raupe nach Anspruch 1, **dadurch gekennzeichnet**, dass das Expansionsrohr (1) aus Paragummi besteht.

6. Raupe nach Anspruch 1, **dadurch gekennzeichnet**, dass an Stelle des Durchführungsschlauchs (4) ein starres Rohr mit einer dichten Teleskopverbindung oder einer dichten, elastischen Verbindung vorgesehen ist.

7. Abdichtungsfilz (15) nach Anspruch 1, **dadurch gekennzeichnet**, dass jedes Filzstück relativ zur Trockenlegungsstrecke auf die doppelte Länge zugeschnitten wird und vor oder nach dem vorzugsweisen Beschichten desselben auf sich selbst umgeschlagen wird, indem man die beiden beschichteten Flächen aufeinanderlegt.
